# EUROPÄISCHE PATENTSCHRIFT

(11) **EP 1 667 884 B1**
(45) Veröffentlichungstag und Bekanntmachung des Hinweises auf die Patenterteilung: **12.03.2008**
(21) Anmeldenummer: 04761942.4
(22) Anmeldetag: 28.09.2004
(51) Int. Cl.: B61F 3/16, B60B 17/00

(54) **RADSATZ EINES SCHIENENFAHRZEUGS**
WHEEL SET OF A RAILWAY VEHICLE
ESSIEU DE VEHICULE SUR RAILS

(30) Priorität: 29.09.2003 CH 165203
(43) Veröffentlichungstag der Anmeldung: 14.06.2006
(73) Patentinhaber: LARSSON, Göran, 6300 Zug (CH)
(72) Erfinder: LARSSON, Göran, 6300 Zug (CH)
(74) Vertreter: Clerc, Natalia
(86) Internationale Anmeldenummer: PCT/CH2004/000602
(87) Internationale Veröffentlichungsnummer: WO 2005/030553

(56) Entgegenhaltungen:
- DE-A- 3 427 723
- DE-A- 3 942 235
- US-A- 2 842 393
- PATENT ABSTRACTS OF JAPAN Bd. 017, Nr. 368 (M-1443), 12. Juli 1993 (1993-07-12) -& JP 05 058104 A (MASAHIKO WAKAEYA), 9. März 1993 (1993-03-09)

## Beschreibung

### Technisches Gebiet

Die Erfindung betrifft einen Radsatz eines Schienenfahrzeugs gemäss Oberbegriff des Patentanspruchs 1.

### Stand der Technik

Aus dem Stand der Technik sind beispielsweise Schienenfahrzeuge bekannt, welche starre Radsätze aufweisen. Ein starrer Radsatz weist ein rechtes und ein linkes Rad auf, welche über eine Achse fest miteinander verbunden sind, so dass der Radsatz als Ganzes dreht. Jedes Rad weist eine kegelförmige Lauffläche auf, welche auf einer Seite mittels eines radial vorstehenden Flansches, dem Spurkranz, begrenzt ist. Die beiden kegelförmigen Räder führen zum sogenannten Sinuslauf, bei welchem der Radsatz zusätzlich zum Rollen eine Gleitbewegung ausführt. Diese Gleitbewegung entsteht durch eine Relativbewegung zwischen Rad und Schiene und erfolgt quer zur Fahrtrichtung. Sie wird erzeugt, indem der Spurkranz wie ein kontinuierlicher Keil im Spurkranzdruckpunkt am Schienenkopf schräg abwärts gleitet. Bei engen Gleisbögen reicht diese Kegelform nicht mehr aus, so dass der Spurkranz die Schiene berührt. Auf Grund des begrenzten Spurspiels ist zudem oftmals nur ein abgehackter Sinuslauf möglich, der selbst bei gerader Fahrt der Eisenbahn bemerkbar ist. Verschleiss, unruhige Fahrt und ein unerwünschtes Quietschen sind die wahrnehmbaren Folgen. Mit zunehmender Geschwindigkeit werden die Anlaufstöße stärker bzw. größer, sodass auch der Verschleiss zunimmt.

Um die Kurvenfreudigkeit zu erhöhen, muss der Achsabstand klein sein. Bei grösseren Wagen werden deshalb Drehgestelle benutzt, um die einzelnen starren Radsätze federnd miteinander zu verbinden. Nachteilig an derartigen Konstruktionen ist jedoch, dass sie recht schwer, kompliziert aufgebaut und somit insgesamt eher unwirtschaftlich sind.

Eine andere bekannte Art Schienenfahrzeuge weist sogenannte Losräder auf, welche einzeln drehbar sind. Bei diesen Losrädern übernimmt der Spurkranz die Führung, so dass ein Dauerquietschen resultiert. Es sind zwar Systeme, wie beispielsweise von Talgo oder das Cobra-Tram bekannt, welche ein mechanisch vom Wagenkasten aus gesteuertes System zur Radialeinstellung der Räder aufweisen. Diese Systeme sind jedoch relativ aufwendig gestaltet, was die Herstellungskosten erhöht.

DE-A-34'42'235 offenbart ferner ein Laufwerk für schienengebundene Fahrzeuge mit unabhängig voneinander drehbaren Rädern mit einem Spurkranz. Jedes Radlager ist um eine vertikal durch den Radaufstandspunkt verlaufende Schwenkachse verschwenkbar. Die Lauffläche der Räder ist ein flach gelagertes Kegelprofil.

DE-A-39'42'235 und GB-A-469'248 beschreiben Radsätze mit einer starren Achse, auf welcher lenkbare Einzelräder angeordnet sind.

Die DE 34 27 723 zeigt ein spurgebundenes Fahrzeug nach dem Oberbegriff des Anspruchs 1, mit lenkbaren Radsätzen. Die Räder lassen sich um eine vertikale Achse schwenken, so dass sich diese dem Kurvenradius anpassen können. Die Lenksteuerung erfolgt über einen Hebelmechanismus, der die Auslenkung der Drehgestelle gegenüber dem Wagenkasten auf die Radsätze überträgt. Die Lenkachslinie steht senkrecht zur Fahrbahn und fällt mit den Radaufstandspunkt zusammen. Der Radsatz wird durch den Spurkranz der Räder seitlich in der Schiene geführt.

### Darstellung der Erfindung

Es ist deshalb Aufgabe der Erfindung, eine Konstruktion zu schaffen, welche die Lärmbelastung, d.h. das Quietschen der Räder, und auch den Materialverschleiss minimiert.

Diese Aufgabe löst ein Radsatz mit den Merkmalen des Patentanspruchs 1.

Der erfindungsgemässe Radsatz weist ein rechtes und ein linkes Rad auf, welche über eine Radverbindungsachse miteinander verbunden sind. Dabei sind die Räder schwenkbar an der Radverbindungsachse angeordnet. Die Radverbindungsachse ist über eine rechte Schwenkachse mit dem rechten Rad und über eine linke Schwenkachse mit dem linken Rad verbunden ist, wobei die rechte und linke Schwenkachse so angeordnet sind, dass sie je in einer Ebene liegen, welche senkrecht zu einer Radachse des rechten bzw. linken Rads verlaufend eine Lauffläche dieses Rads schneiden. Die zwei Räder weisen Laufflächen auf, welche doppelkegelförmig ausgebildet sind. Diese Ebenen bilden mindestens annähernd den Übergangsbereich von einem ersten zu einem zweiten Kegel der doppelkegelförmigen Laufflächen bilden.

Die erfindungsgemässe Lösung verwendet somit den einfachen Aufbau des starren Radsatzes und nutzt die Flexibilität einer schwenkbaren Anordnung, ohne dass komplizierte Drehgestelle für starre Radsätze oder Einzelradaufhängungen für Losräder notwendig wären. Insbesondere kann die Radverbindungsachse als einziges Binde- oder Trägerglied zur Aufhängung dienen. Der Materialverschleiss ist gering, da die Räder der Gleisbögen entsprechend verschwenkbar sind. Vorteilhaft ist ferner, dass das Gesamtgewicht des Fahrzeugs verringert und eine kostengünstige Herstellung des Fahrzeugs ermöglicht ist.

Die Anordnung der Schwenkachsen der Radverbindungsachse innerhalb des rechten bzw. linken Rads erhöht die Spurtreue beim Befahren von Gleisbögen. Zudem erlaubt diese Anordnung eine Minimierung der gesamten Masse des Radsatzes.

Vorteilhaft ist auch, dass der erfindungsgemässe Radsatz die Fahrzeuglänge nicht beeinflusst, so dass auch kurze Fahrzeuge mit derartigen Radsätzen versehen werden können.

Die schwenkbare Radverbindungsachse gewährleistet die Spurtreue auch in Gleisbögen. In einem bevorzugten Ausführungsbeispiel wird die Spurtreue mittels einer oder mehrerer Spurstangen erhöht, welche eine Parallelogrammführung beim Verschwenken der zwei Räder des Radsatzes bilden.

Die Verwendung von Rädern mit doppelkegelförmigen Laufflächen führt zu einer weiteren Reduktion der Lärmbelastung und des Materialverschleisses. Der Spurkranz wird stärker entlastet als bei den bekannten kegelförmigen Rädern. Diese Anordnung ermöglicht eine Selbstzentrierung der Räder, so dass der Spurkranz auch bei Toleranzen der Spurbreite der Schiene bzw. des Fahrzeugs entlastet ist.

Da die Schwenkachsen der Radverbindungsachse mindestens annähernd, vorzugsweise genau, in je einer Ebene angeordnet sind, in welche der Übergangsbereich von einem ersten zu einem zweiten Kegel des doppelkegelförmigen Rades fällt, werden optimale Resultate erzielt. Dieser Bereich entspricht dem optimalen Auflagepunkt des Rads auf der Schiene.

Das doppelkegelförmige Rad lässt sich nicht nur im erfindungsgemässen Radsatz, sondern auch in anderen Radsätzen, insbesondere in starren Radsätzen, und auch als Losrad, insbesondere mit Einzelradaufhängung, einsetzen.

Weitere vorteilhafte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, erläutert. Es zeigen:
- Figur 1: einen Wagen eines Schienenfahrzeugs mit zwei erfindungsgemässen Radsätzen gemäss einer ersten Ausführungsform;
- Figur 2: eine perspektivische Darstellung des erfindungsgemässen Radsatzes gemäss Figur 1;
- Figur 3: eine perspektivische Darstellung des Radsatzes gemäss Figur 2 mit gestrichelt dargestellter Radverbindungsachse;
- Figur 4a: einen ersten Längsschnitt durch einen Teil des Radsatzes gemäss Figur 2;
- Figur 4b: einen dazu senkrechten zweiten Längsschnitt durch einen Teil des Radsatzes gemäss Figur 2;
- Figur 5: eine Ansicht des Radsatzes gemäss Figur 2 von vorne auf einem Gleis;
- Figur 6a: eine perspektivische Darstellung eines Radsatzes gemäss Figur 1 in einer ersten Position;
- Figur 6b: in einer zweiten Position;
- Figur 6c: in einer dritten Position;
- Figur 6d: in einer vierten Position;
- Figur 7: einen Längsschnitt durch einen Teil eines Rads in einer zweiten Ausführungsform;
- Figur 8: einen Längsschnitt durch einen Teil eines Rads in einer dritten Ausführungsform;
- Figur 9: einen Längsschnitt durch einen Teil eines Rads in ein er vierten Ausführungsform;
- Figur 10: einen Längsschnitt durch einen Teil eines Rads in ein er fünften Ausführungsform.

### Wege zur Ausführung der Erfindung

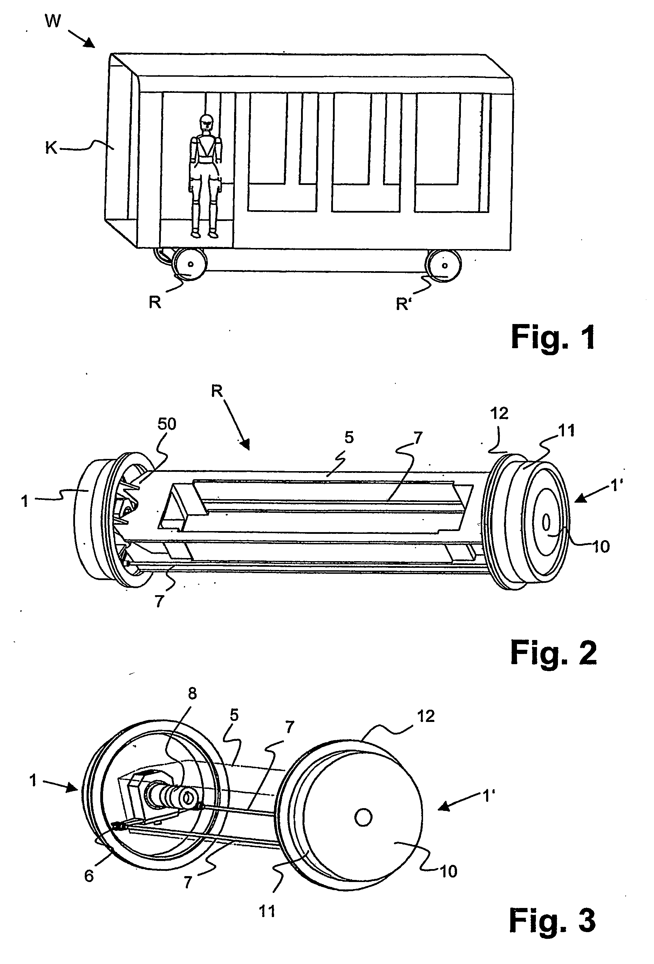

In Figur 1 ist ein Wagen W eines Schienenfahrzeugs, beispielsweise ein Eisenbahnwaggon oder ein Wagen einer städtischen Hochbahn, dargestellt. Er weist einen Wagenkasten K auf, welcher starr bzw. zumindest drehfest über eine Aufhängung mit einem Fahrwerk verbunden ist. Vorzugsweise wird eine Aufhängung gemäss der aus dem Automobilbau bekannten Bauart De-Dion verwendet. Das Fahrwerk weist mindestens einen Radsatz R, R' auf. Hier sind ein vorderer Radsatz R und ein hinterer Radsatz R' vorhanden. Es ist auch möglich, mehrere Radsätze hintereinander anzuordnen.

Jeder Radsatz weist, wie in den Figuren 2 und 3 dargestellt ist, ein rechtes und ein linkes Rad 1, 1' auf, welche über eine Radverbindungsachse 5 miteinander verbunden sind. Diese Radverbindungsachse 5 ist erfindungsgemäss schwenkbar an beiden Rädern 1, 1' gelagert. Die Lagerung wird später detaillierter beschrieben.

In einem einfachsten Ausführungsbeispiel ist die Radverbindungsachse 5 als einfache Stange ausgebildet. Im hier dargestellten Ausführungsbeispiel ist sie jedoch quaderförmig gestaltet, wobei sie einen inneren Freiraum aufweist. Dies erhöht die Stabilität bei geringem Gewicht und ermöglicht zudem den Zugang zu den Radachsenstummel 13 der Räder 1, 1'. Dank diesem Zugang kann im Falle von angetriebenen Rädern die Verbindung mit dem Antrieb auf einfache Art und Weise hergestellt werden. In Figur 3 ist deshalb eine Gelenkwelle oder eine Kardanwelle 8 dargestellt. Den Rädern, insbesondere auch den Laufrädern, können jedoch noch weitere Verbindungen zugeführt werden. Beispielsweise lassen sich elektrische Steuerungsmittel, Bremselemente, Sensoren oder andere Überwachungselemente anbringen.

Der Radsatz weist ferner mindestens eine, hier zwei Spurstangen 7 auf, welche über Gelenke 6 schwenkbar mit den zwei Rädern 1, 1' verbunden sind. Im hier beschriebenen Beispiel sind die Spurstangen 7 Gewindestangen, welche in ein gabelförmiges Gelenk 6 einschraubbar sind. Dies erleichtert ihre Montage und ermöglicht zudem eine Optimierung der Achsenlänge bzw. der Spurbreite.

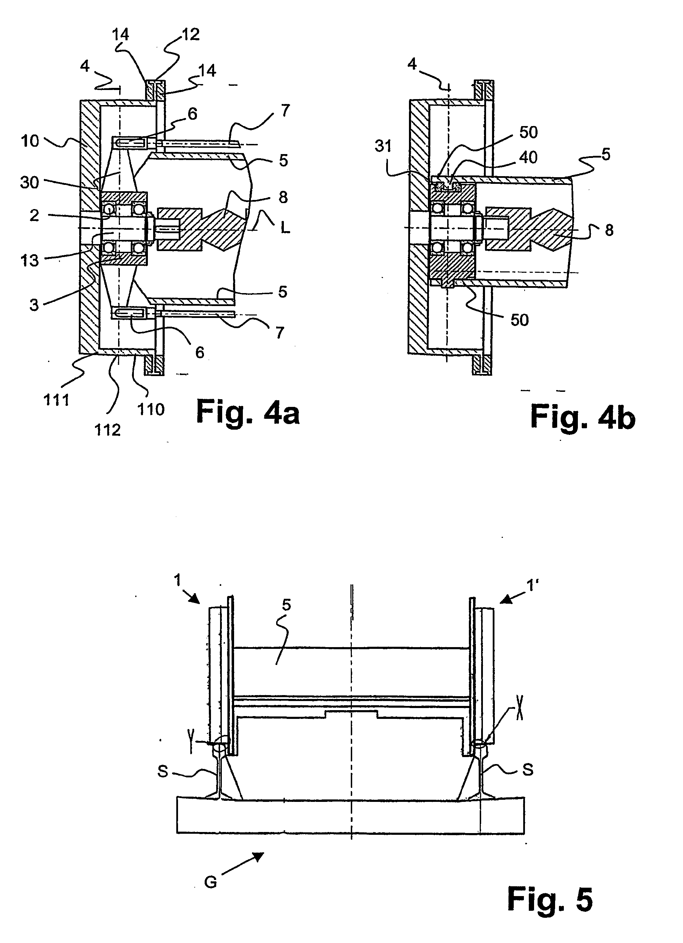

Wie in den Figuren 4a und 4b erkennbar ist, weist jedes Rad 1, 1' eine stummelartige Radachse 13 auf, welche über ein Kugellager 2 in einem Lagergehäuse 3 drehbar gelagert ist. Das Lagergehäuse 3 verfügt über einen Verbindungsflansch 30, an welchem die Radverbindungsachse 5 und die zwei Spurstangen 7 befestigt sind. In Figur 4a sind die Gelenke 6 für die Spurstangen 7 erkennbar. In Figur 4b ist die Lagerung der Radverbindungsachse 5 erkennbar. Die Radverbindungsachse 5 weist an jedem ihrer Längsenden zwei beabstandet voneinander und einander gegenüberliegende Anschlussplatten 50 auf, von welchen je ein Schwenkachsenstummel 40 senkrecht absteht. Jeder Schwenkachsenstummel 40 greift in ein Axialgelenklager 31 des Verbindungsflansches 30 ein. Die zwei Schwenkachsenstummel 40 der zwei gegenüberliegenden Anschlussplatten 50 bilden eine gemeinsame Schwenkachse 4, welche in einer zur Radachse 13 des Rads 1, 1' senkrechten Ebene und ebenfalls senkrecht zur Längsmittellinie L der Radverbindungsachse 5 verläuft. Andere Befestigungsarten sind möglich, solange eine Schwenkung um eine vertikale Achse senkrecht zur Radachse 13 ermöglicht ist. Vorzugsweise ist der Schwenkachsenstummel 40 einstückig an der Radverbindungsachse 4 angeformt. Er kann jedoch auch angeschweisst oder anderweitig befestigt sein.

Wie in den Figuren 4a und 4b dargestellt ist, weisen die Räder 1, 1' im Querschnitt eine u-förmige Grundform mit einem daran anschliessenden Flansch auf. Der Flansch bildet einen inneren Spurkranz 12. Dieser Spurkranz 12 kann wie dargestellt mit drehfesten oder drehbaren Einlagen 14 versehen sein, welche zur Schmierung des Spurkranzes 12 und der Schienen dienen.

In diesem bevorzugten Ausführungsbeispiel weisen die Räder 1, 1' je eine Lauffläche 11 auf, welche doppelkegelförmig ausgebildet ist. Dadurch wird die Lauffläche 11 in einen inneren, dem Spurkranz zugewandten Laufflächenbereich 110 und einen äusseren, der äusseren Radstirnfläche 10 zugewandten Laufflächenbereich 111 unterteilt. Beide Laufflächenbereiche 110, 111 sind kegelförmig ausgebildet und voneinander weg geneigt, so dass sich das Rad 1, 1' einen nach innen und nach aussen abnehmenden Radius aufweist. Der dadurch entstehende erhöhte Übergangsbereich bildet eine Laufflächenkuppe 112.

Die Laufflächenkuppe 112 muss nicht zwingend in der Mitte der Breite der Lauffläche 11 angeordnet sein. Im hier dargestellten Beispiel befindet sie sich näher beim Spurkranz 12. Ferner müssen die zwei kegelförmigen Laufflächenbereiche nicht zwingend denselben Neigungswinkel aufweisen. Neigungswinkel im Bereich von 1.5° sind jedoch bevorzugt. In den hier beschriebenen Figuren ist somit die kegelförmige Ausbildung übertrieben dargestellt.

Die Befestigung der Radverbindungsachse 5 und vorzugsweise ebenfalls diejenige der Spurstangen 7 befinden sich im Hohlraum des u-förmigen Grundkörpers im Bereich der Lauffläche 11 des Rads 1, 1'. Vorzugsweise verläuft dabei die Schwenkachse 4 mindestens annähernd durch die Laufflächenkuppe 112.

In Figur 5 ist der erfindungsgemässe Radsatz auf einem Gleis G mit zwei Schienen S angeordnet. X und Y bezeichnen die Auflagebereiche des rechten bzw. linken Rads 1, 1'. Die doppelkegelförmigen Räder ermöglichen einen Sinuslauf, welcher ein Quergleiten in Richtung der Laufflächenkuppe 112 erzeugt. Dadurch wird der Spurkranz entlastet und die Räder zentrieren sich selbsttätig auf die Gleisspur ein.

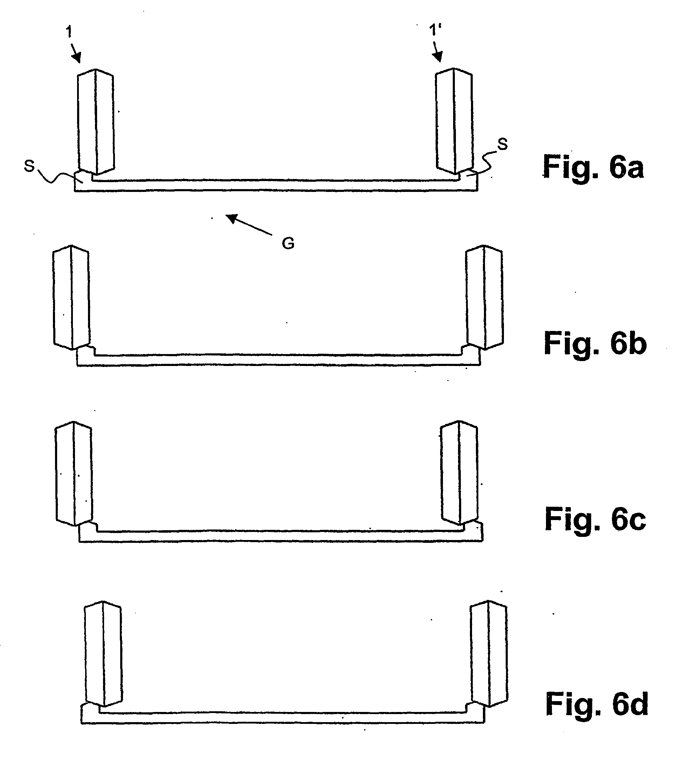

In den Figuren 6a bis 6d sind einige Radpositionen relativ zum Gleis dargestellt, welche dank der erfindungsgemässen doppelkegelförmigen Ausbildung erzielt werden können. In der Position gemäss Figur 6a drehen beide Räder nach aussen und das Fahrzeug fährt gerade aus. In der Position gemäss Figur 6a drehen beide Räder nach innen und das Fahrzeug fährt ebenfalls gerade aus. In Figur 6c drehen beide Räder nach rechts, das Fahrzeug fährt nach rechts. In Figur 6d drehen beide Räder nach links, das Fahrzeug fährt ebenfalls nach links.

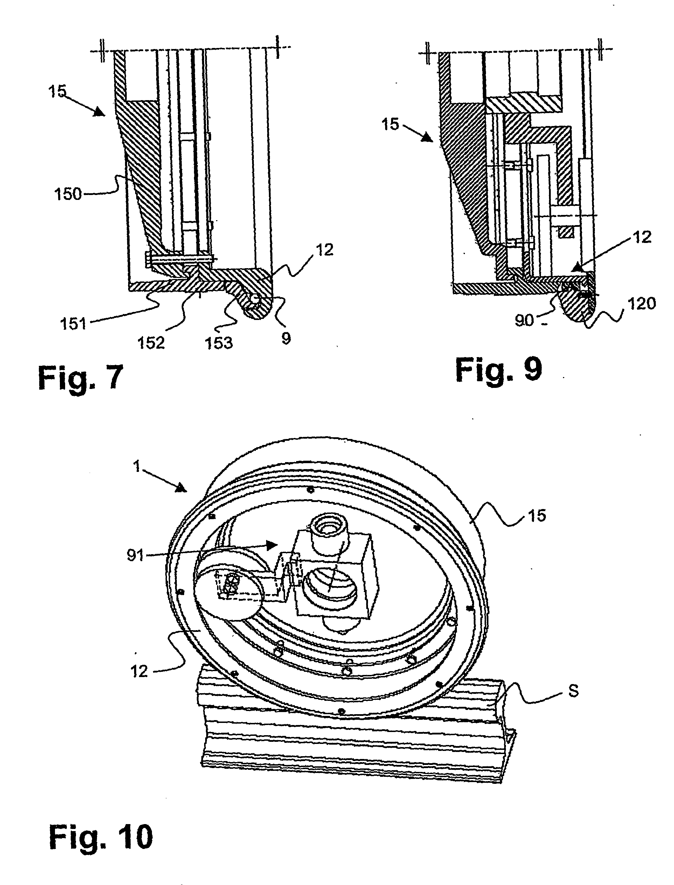

In den Figur 7 bis 9 sind weitere Ausführungsbeispiele dargestellt. In diesen Fällen ist der Spurkranz 12 nicht fest mit dem restlichen Rad 1 verbunden, sondern er ist relativ zu diesem drehbar. Dadurch kann sich seine Geschwindigkeit an seinem Wirkdurchmesser anpassen. Es entsteht ein erhöhter Fahrwiderstand, welches ein Korrekturmoment zur richtigen Seite des Rads hin erzeugt. Der Spurkranz weist somit in beim Befahren einer Kurve üblicherweise eine geringere Geschwindigkeit auf als das restliche Rad. Durch diese Anordnung wird vermieden, dass sich das Rad so bezüglich der Schiene bewegt, dass der Spurkranz die Schiene kontaktiert. Der Materialverschleiss wird minimiert und die Lärmbelastung ebenfalls. Des weiteren wird dadurch verhindert, dass der Radsatz entgleisen kann.

In Figur 7 ist ein Kugellager 9 zwischen Spurkranz 12 und Radkörpers 15 vorhanden. Der Radkörper 15 selber weist eine Felge 150, einen Laufring 151 mit der Lauffläche 152 und einen zwischen Spurkranz 12 und Laufring 151 angeordneten rotationssymmetrischen Distanzhalter 153 auf. Das Kugellager 9, üblicherweise bestehend aus Stahlkugeln, sind zwischen Distanzhalter 153 und Spurkranz 12 angeordnet.

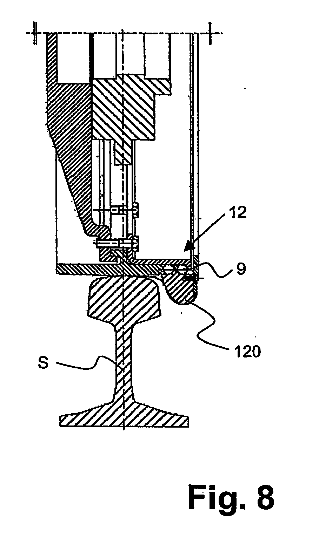

Figur 8 zeig eine dritte Ausführungsform. Hier verfügt der Spurkranz 12 über einen Kugelkranz 120, in welchem das Kugellager 9 gehalten ist. Dieser Kugelkranz 120 bildet zugleich den vorstehenden Flansch.

Die Ausführungsform gemäss Figur 9 weist ein Gleitlager 90 anstelle eines Kugellagers auf. Die Halterung des Gleitlagers 90 kann gleich wie in den Ausführungsformen gemäss den Figuren 7 oder 8 ausgebildet sein.

In Figur 10 ist der Spurkranz 12 über ein Getriebe 91 mit dem Rad gekoppelt. Das Getriebe 91 sorgt dafür, dass der Spurkranz mindestens in der Kurve eine geringere Rotationsgeschwindigkeit aufweist als das restliche Rad 1.

Derartige Räder mit Spurkränzen, welche relativ zum restlichen Radkörper drehbar sind und somit einen geringere bzw. grössere Rotationsgeschwindigkeit aufweisen können, lassen sich auch in anderen Radsätzen einsetzen.

Der erfindungsgemässe Radsatz verringert das Gesamtgewicht und ermöglicht ein relativ kostengünstiges Schienenfahrzeug. Zudem ist insbesondere durch die doppelkegelförmige Radausbildung und die Positionierung der Schwenkachse der Radverbindungsachse innerhalb eines durch die Lauffläche des Rads definierten Raums die Spurtreue gewährleistet und der Materialverschleiss minimiert.

### Bezugszeichenliste

- W: Wagen
- K: Wagenkasten
- G: Gleis
- S: Schiene
- R: vorderer Radsatz
- R': hinterer Radsatz
- X: rechter Auflagebereich
- Y: linker Auflagebereich
- L: Längsmittellinie
- 1: Rechtes Rad
- 10: Radstirnfläche
- 11: Lauffläche
- 110: innere Lauffläche
- 111: äussere Lauffläche
- 112: Laufflächenkuppe
- 12: Spurkranz
- 120: Kugelkranz
- 13: Radachse
- 14: Einlagen
- 15: Radkörper
- 150: Felge
- 151: Laufring
- 152: Lauffläche
- 153: Distanzhalter
- 1': linkes Rad
- 2: Kugellager
- 3: Lagergehäuse
- 30: Verbindungsflansch
- 31: Axialgelenklager
- 4: Schwenkachse
- 40: Schwenkachsenstummel
- 5: Radverbindungsachse
- 50: Anschlussplatte
- 6: Gelenk
- 7: Spurstange
- 8: Gelenkwelle
- 9: Kugellager
- 90: Gleitlager
- 91: Getriebe

## Patentansprüche

1. Radsatz eines Schienenfahrzeugs, wobei der Radsatz ein rechtes und ein linkes Rad (1,1') sowie eine diese zwei Räder (1,1') verbindende Radverbindungsachse (5) aufweist, wobei die Radverbindungsachse (5) schwenkbar mit den zwei Rädern (1,1') verbunden ist und wobei die Radverbindungsachse (5) über eine rechte Schwenkachse (4) mit dem rechten Rad (1,1') und über eine linke Schwenkachse (4) mit dem linken Rad (1,1') verbunden ist, wobei die rechte und linke Schwenkachse (4) so angeordnet sind, dass sie je in einer Ebene liegen, welche senkrecht zu einer Radachse (13) des rechten bzw. linken Rads (1, 1') verlaufend eine Lauffläche dieses Rads (1,1') schneiden, **dadurch gekennzeichnet, dass** die zwei Räder (1,1') Laufflächen (11) aufweisen, welche doppelkegelförmig ausgebildet sind, dass diese Ebenen den Übergangsbereich von einem ersten zu einem zweiten Kegel der doppelkegelförmigen Laufflächen (11) bilden, und dass die Räder (1,1') im Bereich der Laufflächen (11) einen nach innen und nach aussen abnehmenden Radius aufweisen.

2. Radsatz nach Anspruch 1, **dadurch gekennzeichnet, dass** die Radverbindungsachse (5) um vertikal verlaufende Schwenkachsen (4) schwenkbar ist.

3. Radsatz nach einem der Ansprüche 1 oder 2, **dadurch gekennzeichnet, dass** die zwei Räder (1,1') bezüglich der Radverbindungsachse (5) frei rotierbar sind.

4. Radsatz nach einem der Ansprüche 1 bis 3, **dadurch gekennzeichnet, dass** er zusätzlich zur Radverbindungsachse (5) mindestens eine Spurstange (7) aufweist, welche schwenkbar mit den zwei Rädern (1,1') verbunden ist.

5. Radsatz nach Anspruch 4, **dadurch gekennzeichnet, dass** zwei Spurstangen (7) vorhanden sind und dass die Radverbindungsachse (5) zwischen diesen zwei Spurstangen (7) angeordnet ist.

6. Radsatz nach einem der Ansprüche 1 bis 5, **dadurch gekennzeichnet, dass** die Radverbindungsachse (5) eine Längsmittellinie (L) aufweist und dass die zwei Räder (1, 1') je eine Radachse (13) aufweisen, wobei sich für jedes Rad (1,1') die Radachse (13), die zugehörige Schwenkachse (4) und die Längsmittellinie (L) in einem Punkt schneiden und wobei die Längsmittellinie (L) und die Radachse (13) im nicht verschwenkten Zustand eine Gerade bilden.

7. Radsatz nach einem der Ansprüche 1 bis 6, **dadurch gekennzeichnet, dass** jedes Rad (1,1') eine Radachse (13) aufweist, welche drehbar in einem Lagergehäuse (3) gelagert ist und dass am Lagergehäuse (3) ein Verbindungsflansch (30) angeordnet ist, an welchem die Radverbindungsachse (5) schwenkbar angeordnet ist, wobei die Verbindung zwischen Flansch und Radverbindungsachse (5) in einem Bereich zwischen einem inneren Spurkranz (12) des Rads (1,1') und einer äusseren Radstirnfläche erfolgt.

8. Radsatz nach einem der Ansprüche 1 bis 7, **dadurch gekennzeichnet, dass** die Räder (1,1') einen Radkörper (15) und Spurkranz (12) aufweisen, wobei der Spurkranz (12) relativ zum Radkörper (15) rotierbar ist.

9. Radsatz nach Anspruch 8, wobei der Spurkranz (12) über ein Kugellager(9) mit dem Radkörper (15) verbunden ist.

10. Radsatz nach Anspruch 8, wobei der Spurkranz (12) über ein Gleitlager (90) mit dem Radkörper (15) verbunden ist.

11. Radsatz nach Anspruch 8, wobei der Spurkranz (12) über ein Getriebe (91) mit dem Radkörper (15) verbunden ist.

12. Radsatz nach einem der vorhergehenden Ansprüche, **dadurch gekennzeichnet, dass** der Übergangsbereich eine Laufflächenkuppe (112) bildet.

## Claims

1. Wheel set of a rail vehicle, wherein the wheel set has a right-hand wheel (1, 1') and a left-hand wheel (1, 1') and a wheel connection axle (5) which connects these two wheels (1,1'), wherein the wheel connection axle (5) is pivotably connected to the two wheels (1,1'), and wherein the wheel connection axle (5) is connected to the right-hand wheel (1,1') via a right-hand pivoting axle (4) and to the left-hand wheel (1,1') via a left-hand pivoting axle (4), wherein the right-hand and left-hand pivoting axles (4) are arranged in such a way that they each lie in a plane which extends perpendicularly with respect to a wheel axle (13) of the right-hand wheel (1) or left-hand wheel (1'), respectively and intersect a running surface of this wheel (1,1'), **characterized in that** the two wheels (1,1') have running surfaces (11) which are embodied in the form of double cones, **in that** these planes form the junction region from a first cone to a second cone of the double conical running surfaces (11), and **in that** the wheels (1,1') have, in the region of the running surfaces (11), an inwardly decreasing radius and an outwardly.decreasing radius.

2. Wheel set according to Claim 1, **characterized in that** the wheel connection axle (5) can be pivoted about vertically extending pivoting axles (4).

3. Wheel set according to one of Claims 1 and 2, **characterized in that** the two wheels (1,1') are freely rotatable with respect to the wheel connection axle (5).

4. Wheel set according to one of Claims 1 to 3, **characterized in that**, in addition to the wheel connection axle (5), it has at least one track rod (7) which is pivotably connected to the two wheels (1,1').

5. Wheel set according to Claim 4, **characterized in that** two track rods (7) are present, and **in that** the wheel connection axle (5) is arranged between these two track rods (7).

6. Wheel set according to one of Claims 1 to 5, **characterized in that** the wheel connection axle (5) has a longitudinal centre line (L), and **in that** the two wheels (1,1') each have a wheel axle (13), wherein, for each wheel (1,1'), the wheel axle (13) intersects the associated pivoting axle (4) and the longitudinal centre line (L) at a point, and wherein the longitudinal centre line (L) and the wheel axle (13) form a straight line in the non-pivoted state.

7. Wheel set according to one of Claims 1 to 6, **characterized in that** each wheel (1,1') has a wheel axle (13) which is rotatably mounted in a bearing casing (3), and **in that** a connection flange (30) on which the wheel connection axle (5) is pivotably arranged is arranged on the bearing casing (3), wherein the connection between the flange and wheel connection axle (5) is provided in a region between an inner wheel flange (12) of the wheel (1,1') and an outer wheel end face.

8. Wheel set according to one of Claims 1 to 7, **characterized in that** the wheels (1,1') have a wheel body (15) and a wheel flange (12), wherein the wheel flange (12) can rotate in relation to the wheel body (15).

9. Wheel set according to Claim 8, wherein the wheel flange (12) is connected to the wheel body (15) via a ball bearing (9).

10. Wheel set according to Claim 8, wherein the wheel flange (12) is connected to the wheel body (15) via a sliding bearing (90).

11. Wheel set according to Claim 8, wherein the wheel flange (12) is connected to the wheel body (15) via a gear mechanism (91).

12. Wheel set according to one of the preceding claims, **characterized in that** the junction region forms an elevation (112) on the running surface.

## Revendications

1. Essieu de véhicule sur rail, dans lequel l'essieu présente une roue droite et une roue gauche (1, 1') ainsi qu'un axe de liaison des roues (5) reliant ces deux roues (1, 1'), l'axe de liaison des roues (5) étant connecté de manière pivotante aux deux roues (1, 1') et l'axe de connexion des roues (5) étant connecté par le biais d'un axe pivotant droit (4) à la roue droite (1, 1') et par le biais d'un axe pivotant gauche (4) à la roue gauche (1, 1'), les axes pivotants (4) droit et gauche étant disposés de telle sorte qu'ils se situent chacun dans un plan qui s'étend perpendiculairement à un axe de roue (13) de la roue droite, respectivement gauche (1, 1') et coupe une surface de roulement de ces roues (1, 1'), **caractérisé en ce que** les deux roues (1, 1') présentent des surfaces de roulement (11) qui sont réalisées avec une forme en double cône, **en ce que** ces plans forment la zone de transition d'un premier à un deuxième cône des surfaces de roulement (11) en double cône, et **en ce que** les roues (1, 1') présentent un rayon diminuant vers l'intérieur et vers l'extérieur dans la région des surfaces de roulement (11).

2. Essieu selon la revendication 1, **caractérisé en ce que** l'axe de liaison des roues (5) peut pivoter autour d'axes de pivotement (4) s'étendant verticalement.

3. Essieu selon l'une quelconque des revendications 1 ou 2, **caractérisé en ce que** les deux roues (1, 1') peuvent tourner librement par rapport à l'axe de liaison des roues (5).

4. Essieu selon l'une quelconque des revendications 1 à 3, **caractérisé en ce qu'**il présente en plus de l'axe de liaison des roues (5) au moins une barre d'accouplement (7) qui est connectée de manière pivotante aux deux roues (1, 1').

5. Essieu selon la revendication 4, **caractérisé en ce que** deux barres d'accouplement (7) sont prévues et **en ce que** l'axe de liaison des roues (5) est disposé entre ces deux barres d'accouplement (7).

6. Essieu selon l'une quelconque des revendications 1 à 5, **caractérisé en ce que** l'axe de liaison des roues (5) présente un axe médian longitudinal (L) et **en ce que** les deux roues (1, 1') présentent chacune un axe de roue (13), et pour chaque roue (1, 1'), l'axe de roue (13), l'axe de pivotement associé (4) et l'axe médian longitudinal (L) se coupent en un point et dans lequel l'axe médian longitudinal (L) et l'axe de roue (13) forment une droite dans l'état non pivoté.

7. Essieu selon l'une quelconque des revendications 1 à 6, **caractérisé en ce que** chaque roue (1, 1') présente un axe de roue (13) qui est monté à rotation dans un boîtier de palier (3) et **en ce qu'**une bride de liaison (30) est disposée sur le boîtier de palier (3), sur laquelle l'axe de liaison des roues (5) est disposé de manière pivotante, la connexion entre la bride et l'axe de liaison des roues (5) s'effectuant dans une région entre un boudin (12) intérieur de la roue (1, 1') et une surface frontale de roue extérieure.

8. Essieu selon l'une quelconque des revendications 1 à 7, **caractérisé en ce que** les roues (1, 1') présentent un corps de roue (15) et un boudin (12), le boudin (12) pouvant tourner par rapport au corps de roue (15).

9. Essieu selon la revendication 8, dans lequel le boudin (12) est connecté au corps de roue (15) par le biais d'un roulement à billes (9).

10. Essieu selon la revendication 8, dans lequel le boudin (12) est connecté au corps de roue (15) par le biais d'un palier lisse (9).

11. Essieu selon la revendication 8, dans lequel le boudin (12) est connecté au corps de roue (15) par le biais d'un engrenage (91).

12. Essieu selon l'une quelconque des revendications précédentes, **caractérisé en ce que** la région de transition forme un sommet de surface de roulement (112).
